# EUROPÄISCHE PATENTANMELDUNG

(11) **EP 4 124 405 A1**
(43) Veröffentlichungstag der Anmeldung: **01.02.2023**
(21) Anmeldenummer: 22020362.4
(22) Anmeldetag: 29.07.2022
(51) Int. Cl.: B23K 26/08, B23K 26/16, B23K 26/38, B26D 7/18, B26F 1/38, B65H 35/00, D06H 7/24, B25J 15/06, G05B 19/418

(54) **VORRICHTUNG UND VERFAHREN ZUM SCHNEIDEN VON SCHNITTFIGUREN**

(30) Priorität: 29.07.2021 DE 202021002529 U
(71) Anmelder: Vulkan Technic GmbH, 54578 Wiesbaum (DE)
(72) Erfinder: Bayerschen, Ralf, 54614 Schönecken (DE)
(74) Vertreter: Kutsch, Bernd

(57) **Zusammenfassung**

Es wird eine Vorrichtung zum Schneiden von Figuren (K) aus einem in einer Transportrichtung (T) transportierten Materialband (1a, 1b) vorgeschlagen. Die Vorrichtung hat eine Spendereinheit (2a) und eine Empfängereinheit (2b) zum Transportieren des Materialbandes (1a, 1b) in der Transportrichtung (T), sowie eine Bearbeitungsstation (11) mit einer Schneideinrichtung (5) zum Schneiden von Schnittfiguren (K). Weiter hat sie einen Greifer (3) mit mindestens einem Stempel (7) zur Aufnahme der geschnittenen Schnittfiguren (K) und eine Steuerung (12) zum Steuern der Geschwindigkeit des Materialbandes (1a, 1b), der Bewegung der Schneideinrichtung (5) und der Bewegung des Greifers (3). Die Bearbeitungsstation (11) ist innerhalb des Abstandes einer Lücke (X) zwischen Spendereinheit (2a) und Empfängereinheit (2b) des Materialbandes (1a, 1b) angeordnet, wobei die Schneideinrichtung (5) in Arbeitsstellung gegenüber dem Greifer (3) angeordnet ist. Dazwischenliegend verlaufen das Materialband (1a, 1b) und die Stirnseite des Greifers (3) mit Abstand parallel zueinander. Der Zugriff des Greifers (3) erfolgt senkrecht zum Materialband (1a, 1b) auf die Schnittfiguren (K).

## Beschreibung

### Gebiet der Erfindung

Die Erfindung betrifft eine Vorrichtung zum Schneiden von Schnittfiguren, insbesondere von Klebepads, aus bandförmigem Material mittels einer Schneideinrichtung und einem variablen Greifersystem zur Aufnahme der ausgeschnittenen Schnittfiguren oder Klebepads, sowie deren Verwendung und Verfahren zum Schneiden von Schnittfiguren.

### Stand der Technik

Klebepads werden benötigt, um einzelne Abdichtmaßnahmen in oft größeren Bauteilen durchzuführen oder dienen als Verbindungselemente. Dabei können diese Klebepads sehr unterschiedliche Größe und Formgebung ausmachen. Insbesondere in der Automobilindustrie ist es wesentlich, produktionsbedingte Löcher in Blechteilen schnell, sicher und möglichst passgenau abzudichten. Dies erfordert eine schnelle, preiswerte und zuverlässige maschinelle Herstellung von Klebepads unterschiedlicher Formen und Mengeneinheiten, wobei die grundsätzliche Aufgabenstellung darin besteht, während des Produktionsprozesses größere Rüstzeiten zu vermeiden, beziehungsweise die Wartezeiten möglichst kurz zu halten und im Idealfall Klebepads in unterschiedlicher Größe, Materialdicke, Ausformung mit einem Arbeitsvorgang gleichzeitig zu erstellen, dabei möglichst wenig Abfall zu erzeugen und die Klebepads exakt geschnitten abzutransportieren ohne die Schnittkanten nachbearbeiten zu müssen.

Ein bekanntes Verfahren zur Erstellung von Klebepads ist das Schneiden in einem aufwändigen, händischen Arbeitsprozess, bei dem aus Moosgummi und Schaumstoffplatten Figuren in die gewünschte, genau dem Umriss des abzudichtenden Bauteils entsprechende geometrische Form geschnitten werden. Die Rückseite eines solchen Schaumstoffpads ist selbstklebend, so dass es einfach auf dem Bauteil angebracht werden kann. Der Nachteil besteht vor allem im teuren Hand-Arbeitsprozess und darin, dass erheblicher Abfall durch die Schnittreste der Schaumstoffplatten entsteht. Ein weiterer Nachteil dieser Fertigungsweise besteht darin, dass nur zweidimensionale Geometrien abgebildet werden können, was bei dreidimensionalen Dichtungsanforderungen dazu führt, dass eine Dichtung aus mehreren verschiedenen Klebepads zusammengesetzt wird.

Weiteres bekanntes Verfahren zur Erzeugung von Klebepads ist das Ausschneiden mittels Rotationsstanze, bei der das Material kontinuierlich durch die Schneideinheit gefördert wird, sowie die Verwendung von Hubstanzeinheiten, bei denen der Vorschub intermittierend erfolgt. Nachteil beider Verfahren ist, dass in der Regel jeweils nur eine Kontur ausgeschnitten wird.

Die WO 2007/110738 A1 offenbart eine Vorrichtung und ein Verfahren zum Erzeugen von Etiketten für die Lebensmittelindustrie. Die zu schneidende Folie wird zunächst auf eine Aufnahmerolle mittels Luft angesaugt und mittels Laser geschnitten, wobei der Laser kompliziert in Abhängigkeit von der Drehgeschwindigkeit und Dreh Art der Trommel gesteuert werden muss. Die geschnittenen Etiketten werden per Zwischenspeicherung auf eine andere Trommel übertragen und abtransportiert.

Die WO 2016/082915 A1 betrifft ein Verfahren zur Erstellung von Airbags in der Automobilindustrie, bei dem mehrere Materiallagen gleichzeitig bearbeitet werden. Die hierbei auftretende Problematik des Verzuges der Materiallagen beim mechanischen Schneiden wird dadurch gelöst, dass ein zweiter Arbeitsgang erfolgt. Zwischen den beiden Arbeitsgängen wird die Position der Materiallagen mittels eines optoelektrischen Verfahrens erfasst und ein Verzug beim zweiten Schneidvorgang korrigiert.

Die DE 10 2016 006 165 A1 beschreibt ein Verfahren zum Ausschneiden von Gegenständen aus gestapelten bahnförmigen Materialien. Ein der Bearbeitungsstation vorgelagerter Materialbahnstapel wird auf eine unterhalb des Bandes befindliche Auflageeinrichtung abgelegt, die wiederum die Stapel auf die Fördereinrichtung zur Schnittstation überführt. Auflageeinrichtung und Fördereinrichtung sind entkoppelt. Zur Aufnahme neuer Stapel wird die Auflageeinrichtung wieder in die Grundstellung zurückgeführt. Nach Überführen der mehreren Materialbahnen auf die Fördereinrichtung und Bearbeitungsstation muss der Materialstapel in Bezug auf die Schnitteinheit neu justiert werden. Dies geschieht aufwändig durch berührungslos ermittelte Daten bezüglich der Lage des Gegenstandes auf der Materialbahn und Übermittlung dieser Daten an die Schneidvorrichtung.

Die DD 239 984 A1 beschreibt eine Vorrichtung und Verfahren zur Beschichtung von Profilleisten in der Möbelindustrie bei dem in einem Arbeitsgang aus einem Dekorfolienband, welches mit Schmelzkleber beschichtet ist, Dekorfolienplättchen ausgeschnitten und danach auf die Stirnfläche der Profilleiste aufgedrückt und verklebt werden. Beheizbarer Schneidstempel und Schneidplatte haben exakt die gleiche Kontur wie die abzudeckende Stirnfläche. Das ausgeschnittene Folienstück wird unmittelbar nach dem Schnitt durch den beheizbaren Schneidstempel auf die zu beschichtende Fläche gedrückt, wobei durch die erhöhte Temperatur der Klebevorgang aktiviert wird.

DE 10 2017 102 385 A1 beschreibt einen Greifer zum adaptiven, sicheren Halt eines Produktes aus der Lebensmittelindustrie während der kontinuierlichen Bearbeitung im Prozess, wobei das Lebensmittelprodukt mechanisch geschnitten wird. Gelöst wird diese Aufgabenstellung durch mindestens einen Greifer mit einer Ansaugeinrichtung mit flexibler Anlagefläche und Dichtung, die mit einem Endabschnitt des Produktes in Verbindung gebracht wird. Der Greifer wird gegen den Endabschnitt des Produktes gedrückt und passt sich mit einer weichen Anlagefläche der Form des Körpers an. Unter Verwendung eines zweiten Greifers können unterschiedliche Haltekräfte zur Kompensation der erheblich auftretenden Querkräfte während des mechanischen Schneidens eines Produktes erzeugt werden.

Es ist Aufgabe der vorliegenden Erfindung, für die wirtschaftliche Herstellung von Formteilen wie Schnittfiguren, insbesondere Klebepads, unterschiedlicher Kontur und Größe, durch Ausschnitt aus einem endlosen Materialband oder einem endlichen Materialstreifen eine Lösung zu finden, bei der die unterschiedlichen Schnittfiguren bei optimaler Materialausnutzung während oder unmittelbar im Anschluss an den Schneidvorgang möglichst prozesssicher weiterverarbeitet werden können.

Bevorzugt wird weiter die gleichzeitige Produktion von mehreren unterschiedlichen Schnittfiguren in Größe und Form in einem Arbeitsgang bei gleichzeitiger Optimierung der Materialausnutzung gefordert. Die Rüstzeit der Anlage soll möglichst verkürzt werden.

### Zusammenfassung der Erfindung

Die Aufgabe wird gelöst mittels einer Vorrichtung nach Anspruch 1, einem Verfahren nach Anspruch 11 oder 12 und eine Verwendung nach Anspruch 13.

Vorteilhafte Weiterbildungen der Erfindung sind Gegenstand der abhängigen Ansprüche.

Bevorzugter Gegenstand der Erfindung ist die Ausgestaltung einer Vorrichtung zum Ergreifen der geschnittenen Klebepads während des Produktionsprozesses mittels Greifer, wobei mehrere unterschiedliche Schnittfigurformen und -größen gleichzeitig produziert werden können und so eine optimale Ausnutzung des Materialbandes bei gleichzeitiger Reduktion der Schnittgutabfälle erfolgt. Durch parallele Fertigung kann die Ausfallsicherheit erhöht und die Rüstzeit für die Anlage verringert werden.

Für die Herstellung besonders geeignet sind relativ weiche, flexible Materialien in der Ausbildung als Endlosware auf Rollen als Materialband oder auch als geschnittene Materialbahn oder Materialstreifen definierter Länge und Breite, wobei diese einseitig klebend oder auch zweiseitig klebend bereitgestellt werden können. Denkbar ist auch das Fehlen jeglichen Kleberauftrages zum Beispiel bei Material für Bastelbedarf.

Geeignete Materialien sind auch Kunststoffwaren wie Klebebänder, Schaumbänder und Folien, textile Materialien wie Stoffbahnen mit und ohne Beschichtung, Endlospapiere, beschichtete Papiere oder auch Kartonagen, Gummiwaren, Verbundwerkstoffe, auch als mehrlagiges Material. Es ist auch denkbar, im Falle der Ausführung eines Materialstreifens dünne Materialien aus Metall oder Kunststoff zu bearbeiten.

Die Bereitstellung des Materials erfolgt in der Regel als Endlosware eines Rollenbandes, kann aber auch als einzelne Materialbahn oder geschnittener Materialstreifen erfolgen.

Die Zufuhr einzelner Materialbahnen oder -streifen zur Bearbeitungsstation wird dabei vorzugsweise über Einzug-, Einschub- oder Vorschubbewegung vorgenommen, wobei eine vorgelagerte, von der externen Steuerung in der Geschwindigkeit gesteuerte Transporteinrichtung als Spendereinheit die Materialbahn oder den Materialstreifen der Bearbeitungsstation zuführt, und eine Empfängereinheit zur Aufnahme der Materialbahnreste nach der Bearbeitung in der Ausführung als Sammelbehälter, Karton, Abfallbehälter oder auch als Aufwickeleinheit vorliegen kann.

Die Materialbahn kann in gewickelter oder gefalteter Form beispielsweise auch als Leporello vorliegen wobei die Zufuhr der Materialbahn aus einem Spender, wie einer Kartonage oder geeignetem Sammelbehälter, erfolgen kann.

Die Zufuhr eines Materialbandes von Rolle zur Bearbeitungsstation erfolgt über eine als Abwickeleinheit ausgebildete Spendereinheit vor der Bearbeitungsstation und einer als Aufwickeleinheit ausgebildeten Empfängereinheit hinter der Bearbeitungsstation. Der Vorschub wird veranlasst durch elektronische Steuerung und kann getaktet, kontinuierlich oder auch diskontinuierlich erfolgen, nach Maßgabe des Schnittprogrammes. Alternativ sind eine pneumatische Steuerung und Förderung möglich bzw. sind auch Kombinationen aus elektronischer Steuerung und pneumatischer Steuerung möglich.

Die Abfuhr eines geschnittenen, bearbeiteten Materialbandes kann durch synchrones Aufwickeln auf eine Restmaterialbandrolle erfolgen, es ist aber auch der Ablauf in einen gesonderten Abfallbehälter möglich. Alternativ können Restabschnitte auch einfach abgesaugt oder geschreddert werden.

Die Vorrichtung zum Ausschneiden von Gegenständen oder auch Schnittfiguren aus bandförmigem Material mittels einer Schneideinrichtung und einem unabhängig von der Schneideinrichtung und unterhalb des Transportbandes angeordneten Greifer weist eine Saugeinrichtung zum Erfassen und zur Aufnahme des Schnittgutes auf, wobei die Kontur der Endabschnitte des Greifers herkömmlich der Kontur der ausgeschnittenen Figuren entspricht und der Greifer von unten mit einzelnen Stempeln die ausgeschnittenen Figuren erfasst.

Die Vorrichtung zum Schneiden von Schnittfiguren aus einem kontinuierlich oder diskontinuierlich in einer Transportrichtung transportierten Materialband oder Materialstreifen besteht im Groben aus: einer Spendereinheit zur Zufuhr, einer Empfängereinheit zur Abfuhr des Materialstreifens oder Materialbandes in Transportrichtung sowie einer definierten Lücke zwischen der Spendereinheit und der Empfängereinheit, die den Raum für die Bearbeitungsstation aus einer Schneidvorrichtung und einer Greifvorrichtung eines variablen Greifarms eines Roboters oder Handlingmodules bildet.

Die Schneidvorrichtung ist innerhalb der Lücke und oberhalb des Materialbandes oder Materialstreifens beweglich angeordnet und führt die Schnittbewegung zum Schneiden der Figuren von oben in negativer Y-Richtung, senkrecht zur Transportrichtung des Materialbandes, durch.

Gegenüber der Schneidvorrichtung, innerhalb der Lücke und unterhalb des Materialbandes, ist ein Greifer eines Roboter- oder Achssystems angeordnet, der die nunmehr geschnittene Figur, auch Schnittfigur, durch Greifbewegung in Y-Richtung präzise aufnimmt und entfernt.

Durch dieses Anlagenkonzept ist eine einfache und schnelle Austauschbarkeit einzelner relevanter Komponenten zum Abtransport des Schnittgutes während des Betriebes der Anlage gewährleistet.

Weiterhin erfolgt die Abfuhr der Schnittreste als Abfall der Produktion der Schnittfiguren effizienter.

Wichtig für eine vorteilhafte Ausführung der Erfindung ist, dass die Lage des Materialbandes und die Stirnseite des Greifers mit Abstand parallel verlaufen und der Zugriff des Greifers senkrecht zum Materialband auf die Schnittfiguren erfolgt.

Im Rahmen des Erfindungsgedankens ist auch eine gedrehte Anordnung der gesamten Bearbeitungsstation möglich, bei der der Greifer oberhalb und die Schneideinrichtung unterhalb der Materialbahn positioniert ist. Denkbar ist sowohl eine vertikale als auch eine horizontale oder geneigte Ausrichtung der Bearbeitungsstation aus Greifer und Schneideinrichtung.

Die Programmausführung einer vorliegenden Steuerung zum Steuern der Geschwindigkeit des Materialbandes, der Bewegung der Schneideinrichtung und der Bewegung des Greifers des Roboter oder Achssystems ist so geschaltet, dass im Regelbetrieb einzelne Schnittfiguren gemäß einem vorgegebenen Schneidprogramm geschnitten werden und die geschnittenen Figuren oder auch Schnittfiguren, die noch im geschnittenen Materialband lose platziert sind, durch den Greifer aus dem Materialband und aus dem nunmehr nach Schnitt entstandenen Restgitterband aufgegriffen und abtransportiert werden.

Der erfindungsgemäße Greifer hat vorzugsweise mindestens ein Segment und eine als Stempel ausgebildete Oberfläche, wobei das mindestens eine Segment über jeweils einen separaten Vakuumkreislauf zur Aufnahme der einzelnen Figuren verfügt.

Der mindestens eine Stempel ist vorzugsweise so ausgebildet, dass die Stirnseite eines jeden einzelnen Stempelsegmentes eine Kontur aufweist, die der Kontur der zugeordneten erstellten Schnittfigur in der Regel deckungsgleich oder kongruent ist. Der Greifer weist dazu für das mindestens eine Segment die in kongruenter Formgebung zu der Schnittfigur ausgeführte Stirnseite des Stempels als Anlagefläche der Schnittfigur und als Wirkfläche der Ansaugeinrichtung auf.

Der mindestens eine Stempel des Greifers wird dabei in Abstimmung und Abfolge zur Schnittbewegung der Schneideinrichtung angesteuert und zur Aufnahme der Schnittfigur aus dem Materialband oder Materialstreifen aktiviert, wobei die Lage des Materialbandes oder Materialstreifens mit den erzeugten Schnittfiguren und die Stirnseite der Stempelelemente des Greifers in einem definierten Abstand in Transportrichtung parallel verlaufen. Alternativ kann der Greifer ohne Ausnutzung der Hubfunktion der einzelnen Stempel auch ganzflächig auf die Materialbahn aufgesetzt werden und durch Wegfahren nach dem Schnittvorgang die Figuren mitnehmen.

Der Greifer ist unterhalb des Materialbandes oder Materialstreifens angeordnet und der mindestens eine Stempel des Greifers greift von unten senkrecht in Y-Richtung auf die zugeordnete Schnittfigur zu.

Die Schneideinrichtung befindet sich etwa gegenüber der Position des Greifers zwischen der Spendereinheit und Empfängereinheit und oberhalb des Materialbandes oder Materialstreifens. Eine weitere Auflageeinrichtung ist nicht vorgesehen, kann aber technisch sinnvoll sein und ergänzt werden.

Gemäß vorteilhafter Ausführungsformen der Erfindung wird ein Schnitt der Figuren mittels Laser oder ein Schnitt mit einem Schneidmesser oder ein Schnitt mit einem Ziehmesser analog der Plottertechnik oder ein Ausnadeln oder Ausstanzen einzelner Figuren durchgeführt.

Der Stempel oder im Fall mehrerer Stempel jeder der Stempel des Greifers ist vorzugsweise mit einem eigenen Stirnseitensegment versehen, wobei die Schnittfigur einer ersten Stirnseite eines ersten Stempelsegmentes sich von der Schnittfigur einer zweiten Stirnseite eines zweiten Stempelelementes in Formgebung, und Größe unterscheiden kann. Es ist auch denkbar, dass zwei Figuren zweier benachbarter Stirnseitensegmente identisch sind.

Die Stirnseitensegmente können mit zusätzlichen oder alternativen Mitteln versehen werden, die die Aufnahme der erstellten Schnittfiguren oder Klebepads über das zugeordnete Greifersegment verbessern.

Die Mittel können Krallen, Haken, Saugnäpfchen, eine mittels Lochung oder Erhebungen aufgeraute Oberfläche oder auch Haftmittel wie Haftfolien und Klebeflächen sein. Dies ist von Bedeutung zur Feinjustierung für große Klebepads oder auch für sehr glatte Materialoberflächen. Es ist auch möglich, den Greifer an der Oberfläche lediglich mit mechanischen Mitteln auszustatten, wobei das Ansaugen der Schnittfiguren entfällt.

Der Greifer kann also an der Oberfläche als Adhäsionsgreifer, Nadelgreifer, Klebegreifer oder Bernoulli-Sauger ausgebildet sein, wobei vorzugsweise die Kontur der Stirnseite eines jeden Stempels der Kontur der Schnittfiguren entspricht und mit dieser kongruent ist. Denkbar ist auch ein Verzicht auf eine Kongruenz von Stempelstirnseite und Schnittfigur im konkreten Anwendungsfall. So kann die Anordnung von kongruenten Stirnseiten neben nichtkongruenten Stirnseiten gezielt erfolgen, um z. B. Kollisionen während der Ausführung zu vermeiden. Es ist aber auch möglich, alle Stempelstirnseiten nicht kongruent zu gestalten.

Die Stirnseiten der Stempelsegmente des Greifers sind vorzugsweise lösbar an den Stempelsegmenten angeordnet. Jedes Stirnseitensegment eines ersten Stempels kann einzeln und separat von den Stirnseitensegmenten eines zweiten Stempels oder eines jeweils anderen Stempels ausgetauscht werden.

Der Stempel bzw. jeder der Stempel des mindestens einen Greifers kann aus mindestens zwei Teil-Stempelsegmenten bestehen, wobei jeder der einzelnen Stempel des Greifers einzeln ansteuerbar, abschaltbar und dreidimensional beweglich angeordnet ist, unabhängig von den anderen Stempeln. Sämtliche Segmente der Stempel sind über die zentrale Steuerung gemäß Programmierung ansteuerbar.

Die einzelnen Stempelsegmente des Greifers können separat oder in Gruppen zur Applikation ausgefahren werden. Jedes Segment des Greifers verfügt vorzugsweise über einen separaten Vakuumkreislauf zur Aufnahme der einzelnen Schnittfiguren.

Die Spendereinheit oder Abwickeleinheit des noch ungeschnittenen Materialbandes oder Materialstreifens und die Empfängereinheit oder Aufwickeleinheit des bereits geschnittenen Bandes als Restband oder Reststreifen sind vorzugsweise mit Abstand voneinander auf gleicher Ebene Y angeordnet, wobei eine Lücke in X-Richtung zwischen den beiden Einheiten entsteht, die von dem Materialband oder Materialstreifen durchlaufen wird. Die Begrenzung der Spendereinheit und Empfängereinheit im Abstand der Lücke bilden den Raum für die Bearbeitungsstation.

Der Spendereinheit zugeordnet sein kann eine zusätzliche Aufwickeleinheit für einen sogenannten Liner, ein Abdeckband für selbstklebende Materialbänder. Der Abzug des Liners vom Materialband erfolgt mittels Abzieher und Umlenkrollen vor dem Schnittbereich. Es ist auch möglich Materialband mit Liner zu schneiden und so Klebepads mit abziehbarem Schutz für den Transport zu erzeugen.

Der Abstand X der Lücke ist dabei mindestens so bemessen, dass zwischen den beiden Transporteinheiten die hin- und her bewegbare Schneideinrichtung zum Schneiden von Figuren oberhalb des Materialbandes und der variable Greifer des Roboters oder Achssystems unterhalb des Materialbandes positioniert werden können.

Die Schneideinrichtung und der Greifer eines Roboters oder Achssystem bilden die Bearbeitungsstation, die innerhalb der entstandenen Lücke zwischen der Spendereinheit zur Zufuhr des Materialstreifens oder Materialbandes und der Empfängereinheit platziert ist.

Der Greifer ist in der Lücke unterhalb des Materialbandes oder Materialstreifens platziert und greift in dieser Position von unterhalb des Materialbandes in positiver Y-Richtung senkrecht auf die im Materialband liegenden, bereits geschnittenen Figuren zu. Die ebenfalls in der Lücke geführte Schneideinrichtung führt die Schnitte der Figuren von oberhalb des Materialbandes in negativer Y-Richtung und damit in senkrechter Richtung auf das Materialband aus. Bei Anwendung eines Lasersystems als Schneideinrichtung ist ein hier nicht weiter dargestelltes System zum Absaugen der Lasergase zugeordnet.

Das Materialband oder der Materialstreifen liegt also direkt zwischen Wirkrichtung der Schneideinrichtung und entgegengesetzter Wirkrichtung der Greifeinrichtung. Die senkrechte Ausrichtung von Greifer und Schneideinheit gegenüber dem Materialband oder der Materialbahn ist in der Regel hilfreich, es kann aber davon im Einzelfall durch eine Kippung abgewichen werden.

Vor dem Beginn des Schneidens der Figuren durch die Schneideinrichtung erfolgt bereits ein systemgesteuertes Anfahren bzw. Zustellen des Greifers von unten durch den Roboter oder das Achssystem. Über die kongruente Formgebung der einzelnen Stempelstirnseiten des Greifers mit der jeweils zugeordneten Schnittform der Figuren erfolgt ein exakter, passgenauer und abgestimmter Zugriff von Greifer Stempel auf die zugeordnete Schnittfigur durch die aktivierte Ansaugeinrichtung des Greifers.

Infolge der obigen Forderung nach abgestimmter Abfolge von Schnitt der Figuren durch die Schneidvorrichtung und Zugriff auf die Figuren durch den Greifer mit den zu den Schnittfiguren kongruenten Stempel-Stirnseiten wird, mittels der Steuerung, eine präzise Abfolge zwischen Vorschub des Materialbandes - Zustellen des Greifers - Schnitt der Figur durch die Schneideinrichtung- Aufnahme mittels Greifer definiert und die jeweilige Figur passgenau geschnitten, aufgenommen und abtransportiert.

Ein alternativer Lösungsweg der Aufgabe besteht in der Zufuhr einer Materialbahn oder eines Materialstreifens in Transportrichtung senkrecht zur Schnittvorrichtung über Einschub oder Vorschub aus einem Spender oder Behälter. Ebenso kann die Abfuhr des bearbeiteten Materialstreifen- oder Materialbahnrestes über ein einfaches Abfallentsorgungssystem mit einem Ablauf des geschnittenen bearbeiteten Materialstreifens in einen gesonderten Abfallbehälter erfolgen, wobei ein zusätzliches Stützlager zur zusätzlichen Justierung des Materialstreifens während des Bearbeitungsvorganges nötig ist.

Die Anwendung der Erfindung führt zu einer guten Maßhaltigkeit und Genauigkeit der Schnittfiguren. Mittels Kombination mehrerer unterschiedlicher Figuren ist der Anwender in der Lage die Ausnutzung des Materialbandes zu optimieren unter Beibehaltung von möglichst guter Qualität.

Infolge der Lösbarkeit einzelner Stempelelemente unabhängig von den anderen, ist es als ein Erfolg der Erfindung leistbar, während des Betriebs der Anlage einzelne Stempel auszutauschen oder abzuschalten, auch ohne Abschaltung der Anlage. Es werden teure Rüstzeiten und unnötiger Stillstand der Anlage verringert oder vermieden. Bei einer Produktumstellung ist der komplette Austausch der Greifereinheit als automatischer Werkzeugwechsel möglich.

Für redundante Systeme mit gleicher Materialbahn oder flexible Systeme mit unterschiedlicher Materialbahn ist es möglich, Spendereinheit und Empfängereinheit zu verdoppeln oder zu vervielfachen, wobei jeweils mindestens ein Roboter oder Achssystem mit Greifer mindestens zwei Materialbänder bedienen kann. Ein Schneidsystem kann auch mehrere Bahnen bearbeiten.

Nach Zuschnitt der Figuren aus dem Bandmaterial entsteht ein sogenanntes Materialgitter aus dem vorhandenen Rest-Materialband, welches als Rest-Klebebandgitter mit gleicher Transportgeschwindigkeit von der in der Regel als Aufwickeleinheit ausgebildeten Empfängereinheit aufgenommen wird. Die Abfälle des Schnittverfahrens können als Rest-Klebebandgitter-Rolle anschließend von der Aufwickeleinheit abgenommen und entsorgt werden.

In einer vorteilhaften Ausführungsform der Erfindung ist es vorgesehen, dass statt der Entsorgung das aufgewickelte Material mit Fehlteilen oder brauchbaren Restgittern oder einzelne brauchbare Fehlteile als Einzelausschuss wieder in die Bearbeitungsstation gefördert wird. Dazu erkennt das System aus den Anforderungen an das Gutteil die Mindestanforderungen an die zur Verfügung stehenden Ausschussteile, die mit diesen Informationen, wie Flächengeometrie und Materialstärke in das Zwischenlager verbracht wurden. Oder in der laufenden Produktion erkennt das System ein Match für ein nachzuproduzierendes Schnittmuster bei Freilassung einer laufenden Produktionsposition des sonstigen laufenden Auftrags.

Auf das Einschleusen in die Maschine folgt eine sensorische Ermittlung des IST-Zustandes und ein IST-SOLL-Abgleich mit den Vorgaben aus dem Bearbeitungsauftrag der Bearbeitungsstation. Der Bearbeitungsbedarf wird identifiziert und der Bearbeitungsplan erstellt. Es folgt das Herstellen/Konfektionieren der Klebeformteile und die Applikation der Klebeformteile auf dem Produkt. Nach Bewertung/Überprüfung des Applikationsergebnisses wird erneut ein Ausschuss-/Schlechtteil ausgeschleust / wiedereingeschleust oder es ist alles gelungen und ein Qualitäts-/Gutteil kann als Produkt dem Lagerplatz zugeführt werden.

### Zeichnungen

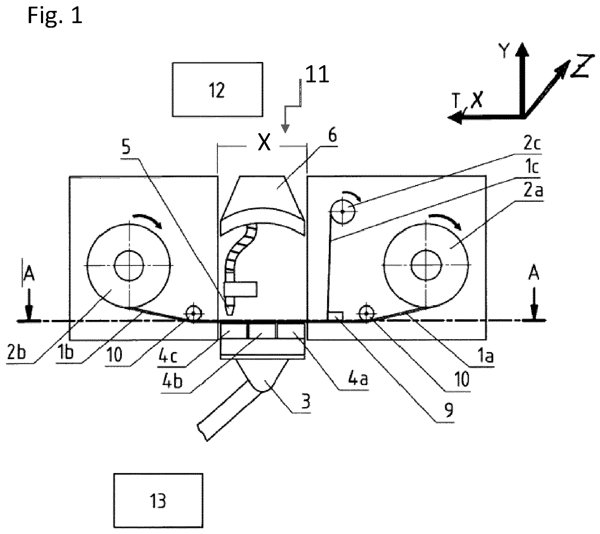

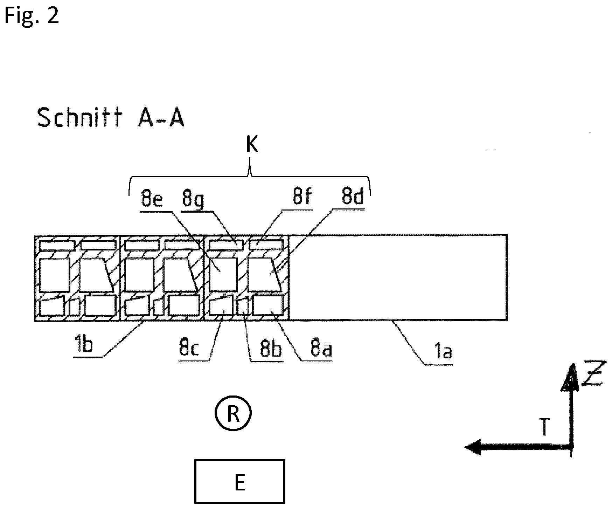

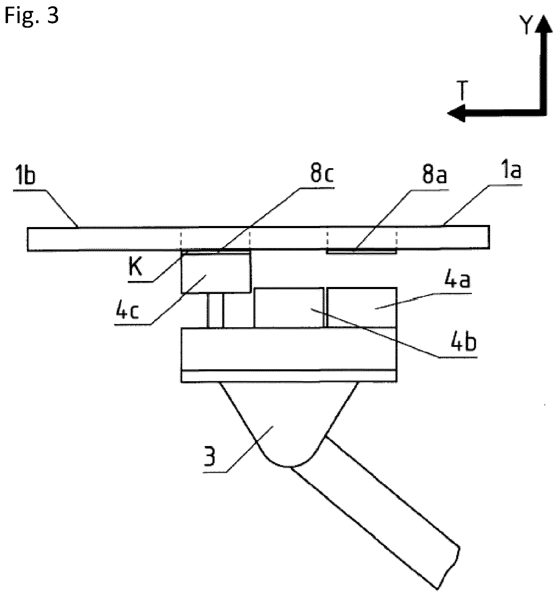

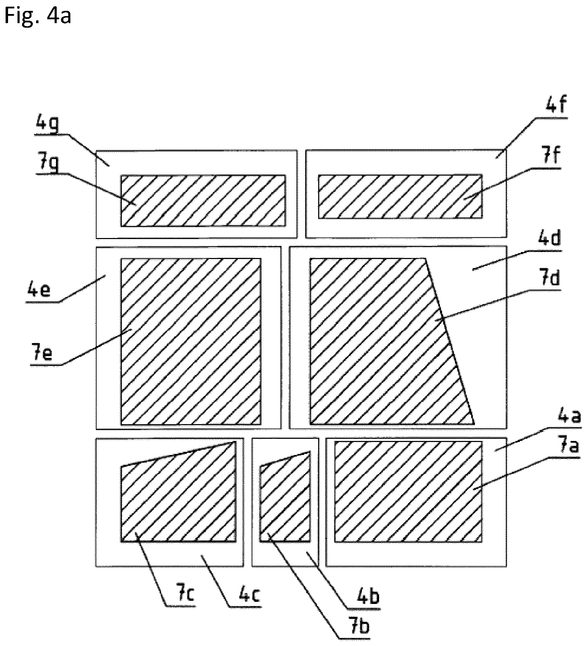

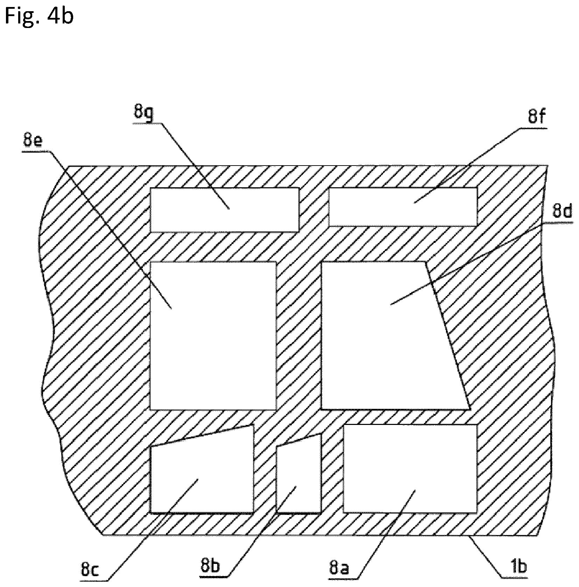

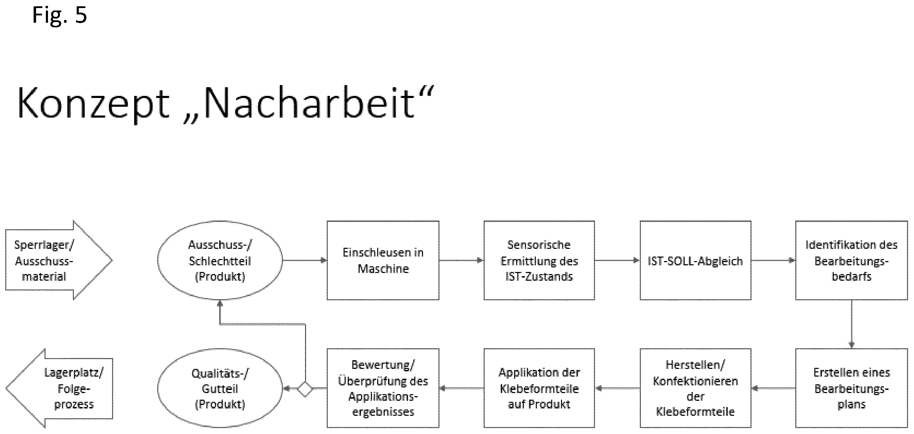

Nachfolgend wird ein Ausführungsbeispiel der Erfindung anhand der Zeichnungen näher erläutert. Es zeigen: Fig. 1 eine schematische Ansicht einer Vorrichtung zum Schneiden von Figuren aus Materialband und die Aufnahme der geschnittenen Figuren durch einen Greifer, Fig. 2 eine Schnittansicht in Richtung AA der Fig. 1, Fig. 3 eine schematische Ansicht eines variablen Greifer und des Materialbandes in Aufnahmeposition, Fig. 4a eine Ansicht der Stempelstirnseiten des Greifers mit Kontur der Schnittfiguren, Fig. 4b eine Ansicht des Rest-Klebebandgitters mit kongruenten Ausschnitten der Figuren nach Schnitt, und Fig. 5 in Zusammenschau mit Figur 2 einen über die direkte Systemgrenze hinausgehenden Arbeitsablauf unter Verwendung der Vorrichtung zum Schneiden von Figuren.

### Ausführungsbeispiele

Fig. 1 zeigt in Gesamtansicht eine vorteilhafte Ausführungsform einer erfindungsgemäßen Vorrichtung zum Schneiden von Klebepads aus Materialband 1a, 1b mit Aufnahme der Klebepads durch einen variablen Greifer 3. Das Materialband 1a, 1b befindet sich in Anordnung in Transportrichtung T zwischen Spendereinheit 2a und der beabstandeten Empfängereinheit 2b. Ein Liner 1c wird über Abzieher 9 von dem Materialband 1a abgezogen und der Liner-Aufwickeleinheit 2c zugeführt.

Das Materialband 1a überquert in Transportrichtung T eine definierte Lücke X und bildet den Raum für die Bearbeitungsstation 11 aus einer hier dargestellten Laserschneideinrichtung 5 mit Absaugeinrichtung 6 und Greifer 3, wobei vor und hinter der Lücke X, 11 Führungsrollen 10 für das Materialband 1a, 1b angeordnet sind. Nach Ausschnitt der Schnittfiguren K aus dem Materialband 1a bildet sich das Restgitterband 1b.

Die Laserschneideinrichtung 5 ist nach Voreinstellung in Richtung Y in Transportrichtung T und in Richtung Z beweglich angeordnet und befindet sich oberhalb des Materialbandes 1a und innerhalb der Lücke X, 11. Der Greifer 3 befindet sich ebenfalls mit in Transportrichtung T und in Y-Z Richtung beweglicher Anordnung unterhalb des Materialbandes 1a und innerhalb der Lücke X, dem Raum für die Bearbeitungsstation 11. Der externe Roboter oder Achssystem 13 bewegt den Greifer 3 gemäß Programmvorgabe der Steuerung 12.

Der einzelne Greifer 3 besteht aus einer Vielzahl von Stempelelementen 4a bis 4c. Die Steuerung 12 steuert und koordiniert die Geschwindigkeit des Materialbandes 1a in Transportrichtung T, die Bewegung der Laserschneideinrichtung 5 in Transportrichtung T und Richtung Z, die Bewegung des Greifers 3 und der einzelnen Stempel 4a-4c in Transportrichtung T und Richtung Y und Richtung Z über den Roboter 13.

Fig. 2 zeigt eine Draufsicht in Schnittrichtung A-A der Fig. 1 auf das Rest-Klebebandgitter 1b nach Ausschnitt der Figuren aus Materialband 1a. Die unterschiedlichen Figurenausschnitte 8a-8c des Materialbandes 1a nach Schnitt durch die Laserschneideinrichtung 5 der Fig. 1, sowie weitere Figurenausschnitte 8d-8g werden dargestellt.

Fig. 3 zeigt eine Vorderansicht des erfindungsgemäßen Greifers 3 in Arbeitsstellung mit nur drei einzelnen Stempeln 4a-4c. Die Stempel werden einzeln angesteuert. Stempel 4c befindet sich in ausgefahrener Stellung und in Kontakt mit der geschnittenen Figur K in dem bereits vorliegenden Rest - Gitterbandausschnitt 8c des Materialbandes 1a und bildet Materialstreifen 1b. Die Stempel 4a und 4b sind nicht ausgefahren.

Fig. 4a zeigt die Unterseite des Greifers 3 einer weiteren vorteilhaften Ausführungsform, diesmal mit den Stempeln 4a-4g. Den einzelnen Stempeln zugeordnet sind die Stirnseitensegmente 7a-7g. Die Stirnseitensegmente sind in Formgebung, Größe und Höhe kongruent den programmgesteuerten Figurenausschnitten 8a - 8g des Materialbandes 1a.

Fig. 4b stellt eine Draufsicht auf das verbliebene Rest-Klebebandgitter 1b mit den Ausschnitten 8a-8g nach Schnitt und Abfuhr der Figuren Ka - Kg dar.

Figur 5 zeigt in Zusammenschau mit Figur 2 einen über die direkte Systemgrenze hinausgehenden Arbeitsablauf unter Verwendung der Vorrichtung zum Schneiden von Figuren K aus dem in der Transportrichtung T transportierten Materialband 1a, 1b, zur bedarfsgerechten Erstellung von Schnittfiguren als Klebeformteile in der Nacharbeit von Applikationsteilen, wobei auf eine Beanstandung zum Applikationsteil das Schnittmuster für das Materialband beeinflusst. Fehlen beispielsweise nur zwei der in Figur 2 dargestellten sieben Schnittfiguren 8a bis 8g, weil beispielsweise ein zu beklebendes komplexes Karosserieteil nur an zwei Positionen schlecht beklebt worden ist, führt das bei dieser besonderen Ausführungsform zur ausnahmsweisen Umgestaltung des Schnittmusters. Es werden gezielt, unter erheblicher Materialeinsparung, die nun benötigten zwei Sonderschnittfiguren erneut geschnitten und für einen Roboter R gesondert entnehmbar bereitgestellt.

Ein als Schlechtteil disqualifiziertes Applikationsteil wird dazu in einen Einlegebereich E neben der Vorrichtung eingelegt, um von dem Roboter R gegriffen zu werden und einer Ermittlung und der späteren erneuten Applikation der benötigten zu schneidenden Schnittmuster bereitzustehen. Ein Bildanalyseverfahren wirkt sich quasi direkt auf das Auftragswesen, das Materialband betreffend, aus. Der Lauf der Vorrichtung wird nur unwesentlich beeinflusst.

Aber auch ohne äußeren Anlass sind mit der Erfindung Steigerungen der Nachhaltigkeit erreichbar: Statt einer sofortigen Entsorgung wird - nicht dargestellt - das aufgewickelte Material mit Fehlteilen oder brauchbaren Restgittern oder einzelne brauchbare Fehlteile als Einzelausschuss wieder in die Bearbeitungsstation gefördert.

Im Fall von nicht auf Rolle zur Verfügung stehendem Material wäre die Position einer entsprechenden Zuführung in der nicht dargestellten Ausführungsform etwa entsprechend dem Einlegebereich E zu wählen. Dazu erkennt das System aus den Anforderungen an das gewünschte Klebeformteil die Mindestanforderungen an die zur Verfügung stehenden Ausschussteile, die mit diesen Informationen, wie Flächengeometrie und Materialstärke in den Einlegebereich E als ein Zwischenlager verbracht wurden.

Auf das Einschleusen in die Maschine folgt, wie vorher im Fall des Applikationsprodukts mit einem Klebeformteilmangel ebenfalls, eine sensorische Ermittlung des IST-Zustandes und ein IST-SOLL-Abgleich mit den Vorgaben aus dem Bearbeitungsauftrag der Bearbeitungsstation. Der Bearbeitungsbedarf wird identifiziert und der Bearbeitungsplan erstellt. Es folgt das Herstellen/Konfektionieren der Klebeformteile, und im Fall der direkten Produktapplikation, die Applikation der neu geschnittenen Klebeformteile auf dem Produkt. Nach Bewertung/Überprüfung des Applikationsergebnisses wird erneut ein Ausschuss-/Schlechtteil ausgeschleust / wiedereingeschleust oder es ist alles gelungen und ein Qualitäts-/Gutteil kann als Produkt dem Lagerplatz zugeführt werden.

## Patentansprüche

1. Vorrichtung zum Schneiden von Figuren (K) aus einem in einer Transportrichtung (T) transportierten Materialband (1a, 1b), mit oder bestehend aus:
einer vorzugsweise als Abwickeleinheit ausgebildeten Spendereinheit (2a) und einer vorzugsweise als Aufwickeleinheit ausgebildeten Empfängereinheit (2b) zum Transportieren des Materialbandes (1a, 1b) in Transportrichtung (T);
einer Bearbeitungsstation (11) mit Schneideinrichtung (5) zum Schneiden von Schnittfiguren (K);
einem Roboter oder Achssystem (13) mit mindestens einem Greifer (3) mit mindestens einem Stempel (7) zur Aufnahme der geschnittenen Figuren (K); und
einer Steuerung (12) zum Steuern der Geschwindigkeit des Materialbandes (1a, 1b), der Bewegung der Schneideinrichtung (5) und der Bewegung des Roboters oder Achssystems (13), **dadurch gekennzeichnet, dass**
die Bearbeitungsstation (11) innerhalb des Abstandes einer Lücke (X) zwischen Spendereinheit (2a) und Empfängereinheit (2b) des Materialbandes (1a, 1b) angeordnet ist, wobei die Schneideinrichtung (5) in Arbeitsstellung gegenüber dem Greifer (3) angeordnet ist, dazwischenliegend das Materialband (1a, 1b), und wobei die Lage des Materialbandes (1a, 1b) und die Stirnseite des Greifers (3) mit Abstand parallel verlaufen und der Zugriff des Greifers (3) senkrecht zum Materialband (1a, 1b) auf die Schnittfiguren (K) erfolgt oder erfolgen kann.

2. Vorrichtung nach Anspruch 1, wobei die Bearbeitungsstation (11) mit oder aus einer in der Transportrichtung (T) sowie in einer senkrecht zur Transportrichtung verlaufenden (Y)-Richtung wirksamen Schneideinrichtung (5) versehen ist.

3. Vorrichtung nach Anspruch 1 oder 2, **dadurch gekennzeichnet, dass** der Greifer (3) mit mindestens einem oder vorzugsweise mehreren Stempeln (4a-4g) bestückt ist und jeder der Stempel des Greifers (3) mit einem zugeordneten Stirnseitensegment (7a-7g) versehen ist, dessen Kontur der Kontur der zugeordneten Schnittfigur (K) kongruent ist, wobei die Kontur der Figur einer ersten Stirnseite (7a) des Stempels (4a) sich von der Figur einer zweiten Stirnseite (7b) des Stempels (4b) in Form und Größe unterscheiden kann.

4. Vorrichtung nach Anspruch 3, **dadurch gekennzeichnet, dass** der mindestens eine Stempel (4a-4g) des Greifers (3) über einen eigenen Vakuumkreislauf zur Aktivierung verfügt und das zu der jeweiligen zugeordneten Schnittfigur (K) kongruente Stirnseitensegment (7a-7g) des mindestens einen Stempels (4a-4g) des Greifers (3) als Anlagefläche der Figur (K) zur Ansaugeinrichtung dient.

5. Vorrichtung nach mindestens einem der Ansprüche 1 bis 4, **dadurch gekennzeichnet, dass** der Stempel bzw. jeder der Stempel (4a-4g) des Greifers (3) einzeln ansteuerbar, abschaltbar und in Anordnung beweglich ist, wodurch jedes der einzelnen Stirnseitensegmente (7a-7g) der zugeordneten Stempel (4a-4g) des Greifers (3) separat zur Applikation ausfahrbar ist.

6. Vorrichtung nach mindestens einem der Ansprüche 1 bis 5, **dadurch gekennzeichnet, dass** die einzelnen Stirnseitensegmente (7a-7g) mit alternativen Mitteln zur Aufnahme der Schnittfiguren (K) versehen sind.

7. Vorrichtung nach mindestens einem der Ansprüche 1 bis 6, **dadurch gekennzeichnet, dass** der mindestens eine Greifer (3) zwischen einem ersten Materialband (1a, 1b) und einem weiterem Materialband (1a', 1b') angeordnet ist.

8. Vorrichtung nach mindestens einem der Ansprüche 1 bis 7, **dadurch gekennzeichnet, dass** das Materialband (1a, 1b) als endlicher Materialstreifen oder als endliche Materialbahn ausgebildet ist und die Zufuhr des Materialstreifens oder der Materialbahn in Transportrichtung (T) senkrecht zur Schneidvorrichtung (5) über Einschub oder Vorschub aus einem Spender oder Behälter (2a) vorgesehen ist und dass die Empfängereinheit (2b) ebenfalls als Behälter ausgebildet ist oder ein Mittel zur Absaugung oder zum mechanischen Abtransport der anfallenden Restmaterialpartikel vorgesehen ist.

9. Vorrichtung nach mindestens einem der Ansprüche 1 bis 8, **dadurch gekennzeichnet, dass** der Vorschub des Materialbandes (1a, 1b), des Materialstreifens oder der Materialbahn nach Maßgabe des Schnittprogrammes getaktet, kontinuierlich oder auch diskontinuierlich über eine vorzugsweise Steuerung vorgesehen ist.

10. Vorrichtung nach Anspruch 8 oder 9, **dadurch gekennzeichnet, dass** der Vorschub des Materialbandes (1a, 1b), des Materialstreifens oder der Materialbahn nach Maßgabe des Schnittprogrammes über eine elektronische oder pneumatische Steuerung vorgesehen ist.

11. Verfahren zum Schneiden von Schnittfiguren (K) aus einem in einer Transportrichtung (T) transportierten Materialband (1a, 1b), mit den Verfahrensschritten:
Transportieren des Materialbandes (1a) von einer Spendereinheit (2a) in Transportrichtung (T) durch eine Bearbeitungsstation (11) zum Schneiden, wobei
ein Roboter oder Achssystem (13) mit mindestens einem Greifer (3) die geschnittenen Figuren (K) aufnimmt und wobei
eine Steuerung (12) die Geschwindigkeit des Materialbandes (1a, 1b), die Bewegung der Schneideinrichtung (5) und die Bewegung des Roboters oder Achssystems (13) steuert,
**dadurch gekennzeichnet, dass**
die jeweilige Schnittfigur (K) mittels gesteuert bewegter Schneideinrichtung (5) dem gleichfalls beweglichen Greifer (3) örtlich zugeordnet mit dazwischenliegendem Materialband (1a, 1b) geschnitten wird und jeweils der Zugriff des Greifers (3) auf die Schnittfigur (K) senkrecht zum Materialband (1a, 1b) erfolgt.

12. Verfahren zum Schneiden von Figuren (K) aus einem in einer Transportrichtung (T) transportierten Materialband (1a, 1b), mit:
einer Spendereinheit (2a) und einer Empfängereinheit (2b) zum Transportieren des Materialbandes (1a, 1b) in Transportrichtung (T);
einer Bearbeitungsstation (11) mit Schneideinrichtung (5) zum Schneiden von Figuren (K);
einem Roboter oder Achssystem (13) mit mindestens einem Greifer (3) mit mindestens einem Stempel (7) zur Aufnahme der geschnittenen Schnittfiguren (K); und
einer Steuerung (12) zum Steuern der Geschwindigkeit des Materialbandes (1a, 1b), der Bewegung der Schneideinrichtung (5) und der Bewegung des Roboters oder Achssystems (13),
**dadurch gekennzeichnet, dass**
die Bearbeitungsstation (11) innerhalb des Abstandes einer Lücke (X) zwischen Spendereinheit (2a) und Empfängereinheit (2b) des Materialbandes (1a, 1b) angeordnet ist, wobei die Schneideinrichtung (5) in Arbeitsstellung gegenüber dem Greifer (3) angeordnet ist, dazwischenliegend das Materialband (1a, 1b), und wobei die Lage des Materialbandes (1a, 1b) und die Stirnseite des Greifers (3) mit Abstand parallel verlaufen und der Zugriff des Greifers (3) senkrecht zum Materialband (1a, 1b) auf die Schnittfiguren (K) erfolgt.

13. Verwendung einer Vorrichtung zum Schneiden von Figuren (K) aus einem in einer Transportrichtung (T) transportierten Materialband (1a, 1b), insbesondere einer Vorrichtung nach einem der Ansprüche 1 bis 10, zur bedarfsgerechten Erstellung von Schnittfiguren als Klebeformteile in der Nacharbeit von Applikationsteilen, wobei eine Beanstandung zum oder des Applikationsteil(s) das Schnittmuster für das Materialband beeinflusst.

14. Verwendung nach Anspruch 13, **dadurch gekennzeichnet, dass** ein als Schlechtteil disqualifiziertes Applikationsteil in einen Einlegebereich (E) insbesondere neben der Vorrichtung eingelegt wird, um von einem Roboter (R) gegriffen zu werden und einer Ermittlung und der späteren erneuten Applikation der benötigten zu schneidenden Schnittmuster bereitzustehen.
